# FASCICULE DE BREVET EUROPEEN

(11) **EP 2 646 294 B1**
(45) Date de publication et mention de la délivrance du brevet: **07.01.2015**
(21) Numéro de dépôt: 11802506.3
(22) Date de dépôt: 24.11.2011
(51) Int. Cl.: B60S 1/48

(54) **CIRCUIT DE DISTRIBUTION DE LIQUIDE LAVE-GLACE POUR VÉHICULE AUTOMOBILE**
SCHALTUNG ZUR ABGABE EINER SCHEIBENWASCHFLÜSSIGKEIT FÜR EIN KRAFTFAHRZEUG
CIRCUIT FOR DISPENSING WINDSHIELD WASHER FLUID FOR A MOTOR VEHICLE

(30) Priorité: 29.11.2010 FR 1059856
(43) Date de publication de la demande: 09.10.2013
(73) Titulaire: Peugeot Citroën Automobiles SA, 78140 Vélizy Villacoublay (FR); MGI Coutier S.A., Champfromier 01410 (FR)
(72) Inventeur: JEUFFE, Gérard, F-78580 Bazemont (FR); LEFEVRE, Jacky, F-92220 Bagneux (FR); HAMZA, Brahim, F-07500 Guilherand-Granges (FR); BOUGUERRA, Akim Driss, F-69100 Villeurbanne (FR); MEYER, Geoffroy, F-26300 Bourg-de-Peage (FR)
(74) Mandataire: Ménès, Catherine
(86) Numéro de dépôt international: PCT/FR2011/052750
(87) Numéro de publication internationale: WO 2012/072919

(56) Documents cités:
- WO-A1-2007/052445
- AU-A4- 2010 100 740
- DE-A1- 2 047 815
- DE-A1- 2 632 755
- DE-A1- 3 840 621
- GB-A- 764 704
- GB-A- 963 951

## Description

La présente invention concerne un circuit de distribution de liquide lave-glace pour un véhicule, tel qu'un véhicule automobile.

Traditionnellement, un circuit de distribution de liquide lave-glace comprend un réservoir de stockage de liquide lave-glace placé dans le compartiment moteur du véhicule ou dans un espace libre de l'aile de ce véhicule, une pompe pouvant être intégrée directement au réservoir de stockage et une canalisation reliant le réservoir de stockage et la pompe à des gicleurs permettant de pulvériser du liquide lave-glace sur le pare-brise du véhicule ou les vitres des phares avant de ce véhicule ou à un gicleur permettant de pulvériser du liquide lave-glace sur la lunette arrière du véhicule.

Les gicleurs sont parfois montés sur les bras de support des raclettes d'essuie-glace ou sur les raclettes d'essuie-glace elles-mêmes et une partie de la canalisation est alors située à l'extérieur du véhicule.

Dans ces conditions, du fait que ces gicleurs et la partie externe de canalisation d'alimentation en liquide lave-glace des gicleurs ne sont pas abrités par le capot moteur du véhicule, le liquide lave-glace présent dans ceux-ci peut geler par temps froid et sous l'effet aérodynamique d'avancement du véhicule, rendant inutilisables les gicleurs.

Afin d'éviter le gel du liquide lave-glace dans les gicleurs et la partie externe de canalisation, une solution simple consiste à purger complètement le circuit de distribution du liquide lave-glace en le retournant dans le réservoir.

Cependant, cette solution a pour inconvénient d'allonger le temps de réponse de la fonction de lavage des vitres surtout quand le réservoir et la pompe sont implantés de façon éloignée des gicleurs.

Le document DE 3840621 décrit un circuit de distribution de liquide lave-glace comportant dans celui-ci une valve permettant de diriger le liquide lave-glace vers au moins un gicleur lorsqu'une pompe d'alimentation en liquide lave-glace est activée et permettant au liquide lave-glace stagnant dans une partie de canalisation située à l'extérieur entre le gicleur et la valve d'être évacué dans le réservoir de stockage de liquide lave-glace lorsque la pompe est arrêtée pour éviter à ce liquide de geler par temps froid. La valve est constituée d'une pièce mobile qui occupe une position différente en fonction de la pression du liquide lave-glace, ouvrant ainsi des passages spécifiques pour permettre l'alimentation du gicleur en liquide lave-glace ou d'évacuer le liquide lave-glace contenu dans la partie externe de canalisation reliée au gicleur.

Cependant, une telle valve est d'une conception relativement complexe et coûteuse.

La présente invention a pour but de pallier les inconvénients ci-dessus des circuits de distribution de liquide lave-glace connus.

A cet effet, selon l'invention, le circuit de distribution de liquide lave-glace pour un véhicule, tel qu'un véhicule automobile, comprenant au moins un gicleur, un ensemble formant clapet disposé dans une canalisation reliant le gicleur à un réservoir de liquide lave-glace et une pompe d'alimentation en liquide de lavage et permettant de diriger le liquide lave-glace vers le gicleur lorsque la pompe est activée et de retourner vers le réservoir le liquide lave-glace présent dans un premier tronçon de canalisation entre le gicleur et l'ensemble formant clapet lorsque la pompe est arrêtée, est caractérisé en ce que l'ensemble formant clapet comprend un flotteur logé dans une chambre d'un corps fixe communiquant d'une part avec le premier tronçon de canalisation et d'autre part avec un second tronçon de canalisation reliant l'ensemble formant clapet au réservoir et à la pompe et en ce que le flotteur peut occuper une position haute dans la chambre lorsque la pompe est activée pour permettre le passage du liquide lave-glace du second tronçon au premier tronçon de canalisation au travers de la chambre et peut s'abaisser avec le niveau de liquide lave-glace dans la chambre lorsque la pompe est arrêtée pour permettre l'évacuation du liquide lave-glace dans le premier tronçon vers le second tronçon de canalisation au travers de la chambre jusqu'à ce que le flotteur occupe une position basse de repos dans la chambre à laquelle il obstrue le passage du liquide lave-glace vers le second tronçon et bloque une colonne de liquide lave-glace dans ce second tronçon.

Selon un premier mode de réalisation, le flotteur est constitué par un pointeau dont la tige supérieure permet le coulissement guidé du pointeau relativement au corps fixe entre ses positions haute et basse de repos et l'extrémité inférieure vient en appui, en position basse de repos du pointeau, sur un siège d'étanchéité au fond du corps fixe et communiquant avec le second tronçon de canalisation.

Avantageusement, un joint annulaire d'étanchéité est interposé entre l'extrémité inférieure du pointeau et le siège d'étanchéité.

Le joint annulaire d'étanchéité est solidaire du siège d'étanchéité ou de l'extrémité inférieure du pointeau.

L'extrémité inférieure du pointeau et le siège d'étanchéité sont tronconiques.

Selon un second mode de réalisation, le flotteur est constitué par une bille venant en appui d'étanchéité, à sa position basse de repos, sur un joint annulaire d'étanchéité solidaire du fond du corps fixe à orifice communiquant avec le second tronçon de canalisation.

Selon une variante de réalisation, la bille comporte une tige supérieure permettant le coulissement guidé de la bille relativement au corps fixe entre ses positions haute et basse de repos.

Avantageusement, le flotteur peut être maintenu à sa position basse de repos par des moyens d'aimantation.

Selon une variante de réalisation, les moyens d'aimantation comprennent un aimant logé dans le flotteur et une pièce métallique ou un autre aimant solidaire du corps fixe à proximité de l'aimant du flotteur pour attirer magnétiquement ce dernier vers la pièce métallique de l'autre aimant.

Selon une autre variante de réalisation, les moyens d'aimantation comprennent un revêtement métallique solidaire du flotteur et un aimant solidaire du corps fixe à proximité du revêtement métallique pour attirer magnétiquement le flotteur.

Le flotteur est réalisé en une matière plastique.

Le flotteur a en outre une densité inférieure à celle du liquide lave-glace.

Le gicleur est monté sur un essuie-glace du véhicule et au moins une partie du premier tronçon de canalisation est située à l'extérieur du capot moteur du véhicule.

L'invention vise également un véhicule, tel qu'un véhicule automobile, et qui est caractérisé en ce qu'il est équipé d'un circuit de distribution de liquide lave-glace tel que défini précédemment.

L'invention sera mieux comprise, et d'autres buts, caractéristiques, détails et avantages de celle-ci apparaîtront plus clairement dans la description qui va suivre faite en référence aux dessins annexés donnés uniquement à titre d'exemple illustrant plusieurs modes de réalisation et dans lesquels :
- la figure 1 est une vue en plan représentant schématiquement un circuit de distribution de liquide lave-glace de l'invention ;
- la figure 2 représente schématiquement en coupe un ensemble formant clapet à flotteur de l'invention présent dans le circuit de distribution de la figure 1 et occupant une position de repos ;

- la figure 3 est une vue semblable à celle de la figure 2 et représentant le flotteur en position haute de passage de liquide lave-glace pour alimenter au moins un gicleur de lavage ;
- les figures 4 et 5 représentent schématiquement en coupe une variante de réalisation de l'ensemble formant clapet à flotteur de l'invention ;
- la figure 6 représente un premier mode de réalisation du flotteur constitué par un pointeau occupant sa position basse de repos avec joint d'étanchéité présent dans le siège d'étanchéité du pointeau ;
- la figure 7 est une vue semblable à celle de la figure 6 et représentant le pointeau à sa position haute de passage de liquide lave-glace pour l'alimentation de gicleurs de lavage ;
- les figures 8 et 9 représentent une variante de réalisation des figures 6 et 7 et selon laquelle des moyens d'aimantation sont prévus pour maintenir le pointeau à sa position basse de repos ;
- les figures 10 et 11 représentent une variante de réalisation des figures 6 et 7 selon laquelle aucun joint d'étanchéité n'est prévu entre le pointeau et son siège d'étanchéité ;
- les figures 12 et 13 représentent une variante de réalisation des figures 10 et 11 selon laquelle des moyens d'aimantation sont prévus pour maintenir le pointeau à sa position basse de repos ;
- les figures 14 et 15 représentent un autre mode de réalisation du pointeau formant flotteur pourvu d'un joint d'étanchéité occupant respectivement une position basse de repos et une position haute de passage de liquide lave-glace vers les gicleurs de lavage ;
- les figures 16 et 17 représentent une variante de réalisation des figures 14 et 15 et selon laquelle des moyens d'aimantation sont prévus pour maintenir le pointeau à sa position basse de repos ;
- les figures 18 et 19 représentent un second mode de réalisation du flotteur constitué par une bille guidée occupant respectivement une position basse de repos en appui sur un joint d'étanchéité et une position haute de passage de liquide lave-glace vers des gicleurs ;
- les figures 20 et 21 représentent une variante de réalisation des figures 18 et 19 selon laquelle des moyens d'aimantation sont prévus pour maintenir la bille guidée à sa position basse de repos ;
- les figures 22 et 23 représentent un autre mode de réalisation du flotteur constitué par une bille libre occupant respectivement une position basse de repos en appui sur un joint d'étanchéité et une position haute de passage de liquide lave-glace vers des gicleurs ; et
- les figures 24 et 25 représentent une variante de réalisation des figures 22 et 23 et selon laquelle des moyens d'aimantation sont prévus pour maintenir la bille à sa position basse de repos.

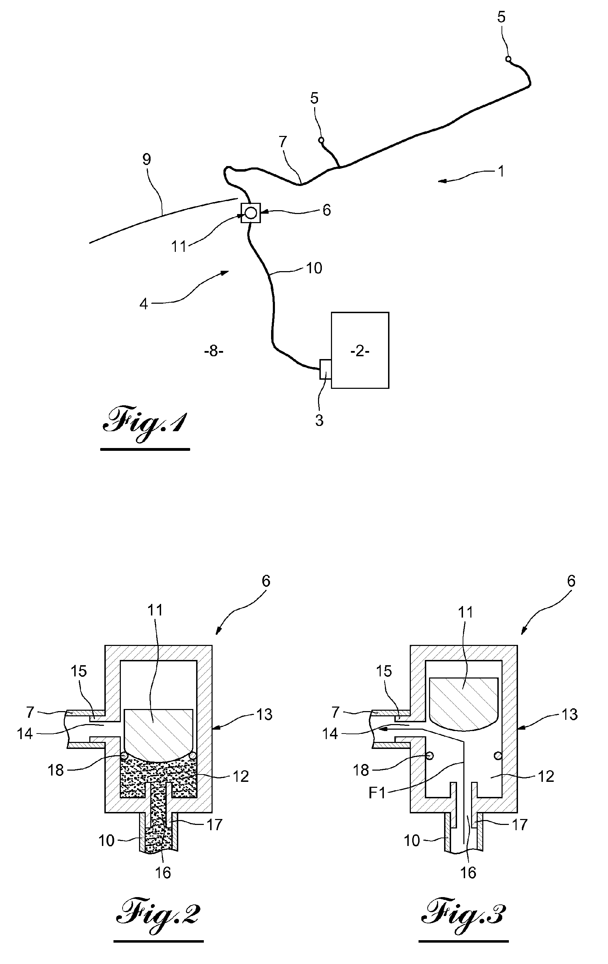

En se reportant tout d'abord à la figure 1, la référence 1 désigne un circuit de distribution de liquide lave-glace d'un véhicule comprenant un réservoir 2 de stockage de liquide lave-glace, une pompe 3 d'alimentation en liquide lave-glace pouvant être intégrée directement au réservoir 2, une canalisation 4 reliant la pompe 3 à deux gicleurs 5 de lavage d'une vitre du véhicule, notamment le pare-brise de celui-ci. Dans ce cas, les deux gicleurs 5 peuvent être montés respectivement sur les deux bras pivotants de support des raclettes d'essuyage du pare-brise ou sur les raclettes d'essuyage elles-mêmes. Cependant, les deux gicleurs 5 peuvent être respectivement montés sur deux bras de support de raclettes d'essuyage de vitres de phares avant du véhicule ou sur les raclettes d'essuyage elles-mêmes. Il est également possible de ne prévoir qu'un seul gicleur monté sur un bras de support de raclette d'essuyage de la lunette arrière du véhicule ou sur la raclette d'essuyage elle-même. Un ensemble formant clapet 6 est situé sur la canalisation 4 et permet de diriger le liquide lave-glace vers les gicleurs 5 lorsque la pompe 3 est activée pour nettoyer la vitre et de redescendre ou d'évacuer vers le réservoir 2 le liquide lave-glace présent ou stagnant dans un premier tronçon supérieur 7 de la canalisation 4 situé entre les gicleurs 5 et l'ensemble formant clapet 6 lorsque la pompe 3 est arrêtée.

Selon la conception du circuit de distribution représentée en figure 1, le réservoir 2 et la pompe 3 sont disposés en partie basse du compartiment moteur 8 du véhicule et fermé par le capot 9 ou peuvent être disposés dans un espace libre de l'aile du véhicule.

L'ensemble formant clapet 6, ainsi que le second tronçon 10 de canalisation reliant cet ensemble à la pompe 3 et au réservoir 2, est également disposé dans le compartiment moteur du véhicule ou sous la grille d'auvent, cet ensemble pouvant être disposé sensiblement au niveau du réservoir 2.

Le premier tronçon supérieur de canalisation 7 raccordé aux gicleurs 5 est en grande partie disposé à l'extérieur du compartiment moteur 8 du véhicule sans être protégé par le capot 9 de sorte que par temps froid et sous l'effet aérodynamique d'avancement du véhicule, le liquide lave-glace contenu dans les gicleurs 5 et le premier tronçon supérieur 7 peut geler.

Selon l'invention représentée aux figures 2 et 3, l'ensemble formant clapet 6 comprend un flotteur 11 logé dans une chambre 12 d'un corps 13 formant boîtier fixé dans le compartiment moteur du véhicule ou sous la grille d'auvent en s'étendant verticalement.

La chambre 12 communique avec le premier tronçon de canalisation 7 au travers d'un orifice 14 réalisé dans la paroi latérale du corps 13 sensiblement au milieu de celle-ci, l'orifice 14 étant prolongé extérieurement par une tubulure 15 de courte longueur sur laquelle est raccordée l'extrémité correspondante du premier tronçon 7. La chambre 12 communique également avec le second tronçon de canalisation 10 au travers d'un orifice 16 réalisé dans la paroi inférieure du corps 13 et qui est prolongé extérieurement par une tubulure de courte longueur 17 sur laquelle est raccordée l'extrémité correspondante du second tronçon 10.

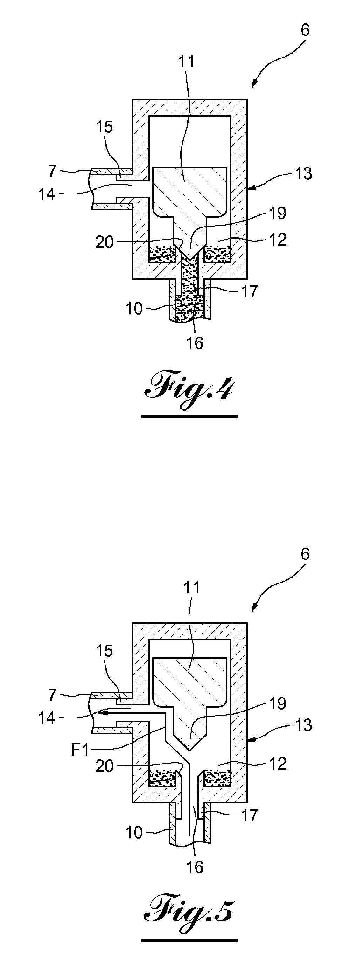

Lorsque la pompe 3 est sollicitée par une commande de l'utilisateur du véhicule, le liquide lave-glace sous pression pénètre dans la chambre 12 au travers de l'orifice inférieur 16 et déplace le flotteur 11 à sa position haute dans la chambre 12 du corps 13 à laquelle le liquide lave-glace est autorisé à passer au travers de la chambre 12 et de l'orifice latéral 14 comme symbolisé par la flèche F1 aux figures 3 et 5 pour circuler ensuite dans le premier tronçon de canalisation 7 afin d'alimenter en liquide lave-glace les gicleurs 5 qui pulvérisent du liquide lave-glace sur la vitre à nettoyer.

Lorsque la commande de la pompe 3 n'est plus activée, le liquide lave-glace présent dans le premier tronçon de canalisation 7 et dans la chambre 12 en dessous du flotteur 11 redescend vers le réservoir de stockage 2 au travers du second tronçon de canalisation 10 avec abaissement du flotteur 11 au fur et à mesure que baisse le niveau de liquide dans la chambre 12 jusqu'à ce que le flotteur 11 arrive à une position relativement basse représentée en figure 2 à laquelle il repose par gravité sur un siège d'étanchéité et est maintenu sur ce siège par effet "ventouse" du liquide lave-glace présent dans la partie de la chambre 12 en dessous du flotteur 11 et dans le second tronçon de canalisation 10, de sorte que le flotteur 11 obstrue le passage du liquide lave-glace dans le tronçon 10 et bloque la colonne d'eau sous celui-ci. De la sorte, tout le liquide lave-glace qui était présent dans le premier tronçon de canalisation 7 est évacué vers le réservoir 2 au travers de l'ensemble formant clapet 6. Bien entendu, le flotteur 11 doit avoir une densité inférieure à celle du liquide lave-glace pour ne pas obstruer le retour du liquide lave-glace dès l'arrêt de la pompe 3, et permettre au liquide lave-glace de revenir en partie au réservoir 2 après avoir été évacué par gravité du premier tronçon de canalisation 7.

Comme représenté aux figures 2 et 3, le siège d'étanchéité du flotteur 11 est constitué par un joint annulaire d'étanchéité 18 solidaire de la face interne cylindrique du corps 13.

De préférence, le flotteur 11 est réalisé en une matière plastique et peut présenter la forme générale d'un piston axialement guidé dans le corps 13 et dont la face inférieure présente une convexité tournée vers le joint 18.

En vidant le premier tronçon de canalisation 7 du liquide lave-glace, il n'y a plus de risque de gel par temps froid et sous l'effet aérodynamique d'avancement du véhicule et le fait de bloquer le liquide lave-glace dans la colonne d'eau sous le flotteur 11 à la position représentée en figure 2 permet de conserver un temps de réponse relativement rapide de la fonction de lavage d'une vitre dès que la pompe est à nouveau activée.

La variante de réalisation représentée schématiquement aux figures 4 et 5 ne diffère de celle des figures 2 et 3 que par sa forme générale en pointeau dont l'extrémité inférieure conique 19 vient en appui d'étanchéité sur un siège conjugué 20 réalisé au fond du corps 13 lorsque le flotteur 11 occupe sa position basse de repos d'obturation du passage du liquide lave-glace vers le réservoir 2 comme représenté en figure 4.

Le fonctionnement du flotteur 11 est identique à celui des figures 2 et 3 mis à part qu'une fois le liquide lave-glace évacué du premier tronçon de canalisation 7 vers le réservoir 2, il subsiste du liquide au fond de la chambre 12 jusqu'au niveau du siège 20 et une colonne de liquide dans le second tronçon de canalisation 10 et sous l'extrémité conique 19 du flotteur 11 pour exercer un effet ventouse appliquant l'extrémité conique 19 sur le siège 20, comme représenté en figure 5. Il subsiste également du liquide résiduel au fond de la chambre 12 lorsque le flotteur 11 occupe sa position haute de passage du liquide lave-glace vers les gicleurs 5 comme représenté en figure 5.

Comme pour le flotteur 11 des figures 2, 3, celui des figures 4, 5 peut être réalisé en une matière plastique et a une densité inférieure à celle du liquide lave-glace.

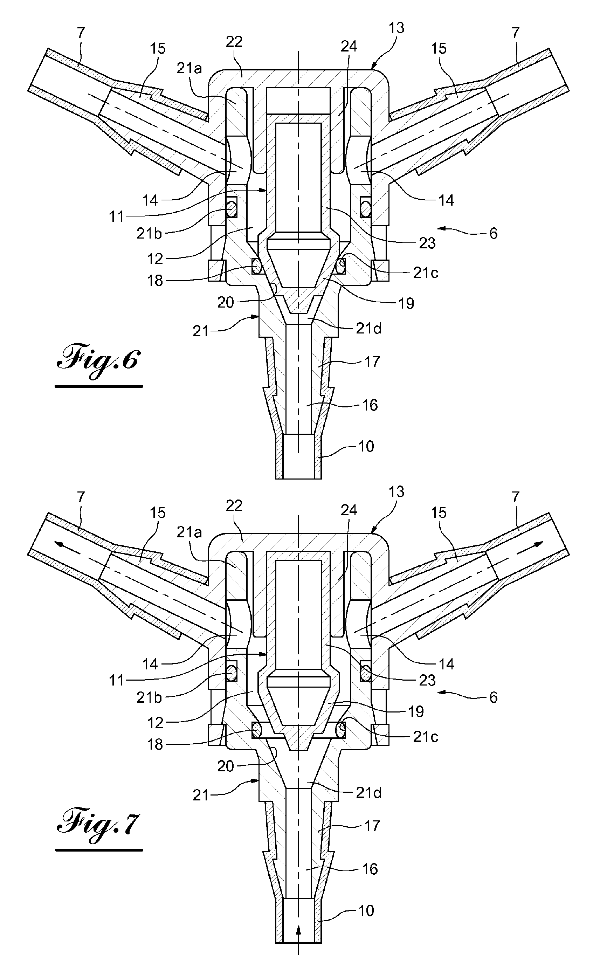

Les figures 6 à 17 représentent plusieurs variantes de réalisation du flotteur en forme de pointeau 11.

Selon ces variantes de réalisation, le corps 13 dans lequel est logé le flotteur 11 est constitué de deux parties comprenant un corps d'embase généralement cylindrique 21 dans lequel est définie la chambre 12 et un couvercle 22 coiffant le corps d'embase 21 pour fermer la chambre 12.

Le couvercle 22 comporte deux tubulures supérieures obliques 15 situées de part et d'autre de ce couvercle communiquant avec la chambre 12 au travers respectivement de deux orifices diamétralement opposés 14 réalisés dans la paroi latérale 21a du corps d'embase 21 et sur lesquelles sont raccordées les extrémités respectivement de deux tuyaux formant le premier tronçon de canalisation 7 et chacun raccordé à un gicleur 5.

Le corps d'embase 21 comprend une tubulure inférieure verticale 17 sur laquelle est raccordée l'extrémité correspondante du second tronçon de canalisation 10 et qui communique avec la chambre 12.

Un joint annulaire d'étanchéité 21b est interposé entre la paroi latérale du couvercle 22 et la paroi latérale 21a du corps d'embase 21 en étant logé dans une gorge de la paroi latérale 21a.

Selon les variantes des figures 6 à 13, le flotteur en pointeau 11 comprend une tige supérieure cylindrique 23 montée à coulissement guidé entre ses positions haute d'alimentation en liquide lave-glace des gicleurs 5 et basse de repos d'obstruction du passage de ce liquide vers le réservoir 2 dans un fourreau fixe 24 solidaire de la paroi supérieure du couvercle 22 et faisant saillie dans la chambre 12.

Le flotteur en pointeau 11 a son extrémité inférieure 19 de forme tronconique venant en appui à la position basse de repos du flotteur sur un siège d'étanchéité de forme conjuguée 20 communiquant avec la tubulure externe 17 de la chambre 12.

Selon les variantes de réalisation représentées aux figures 6 à 9, l'extrémité tronconique 19 du flotteur en pointeau 11 est également en appui d'étanchéité, à sa position basse de repos, sur un joint annulaire d'étanchéité 18 logé dans une rainure annulaire 21c réalisée dans le siège tronconique 20 du corps d'embase 21.

Le fonctionnement de l'ensemble formant clapet 6 à flotteur en pointeau 11 est le même que celui décrit en référence aux figures 4 et 5, c'est-à-dire que lorsque la pompe 3 est sollicitée par une commande de l'utilisateur, le liquide lave-glace sous pression soulève le flotteur en pointeau 11 qui est déplacé de façon guidée vers le haut jusqu'à venir en butée sur la paroi supérieure du couvercle 22 et l'extrémité inférieure tronconique 19 est dégagée de son siège 20 et du joint d'étanchéité 18 pour permettre au liquide lave-glace de circuler dans le corps 13 vers les gicleurs 5 au travers des tubulures 15 et des tuyaux correspondants d'alimentation en liquide lave-glace de ces gicleurs 5. Lorsque la commande n'est plus activée, le liquide lave-glace présent dans le premier tronçon de canalisation 7 redescend vers le réservoir 2 au travers du corps 13 dans lequel le flotteur en pointeau 11 s'abaisse au fur et à mesure que le niveau de liquide dans la chambre 12 s'abaisse jusqu'à ce que l'extrémité inférieure tronconique 19 du flotteur 11 vienne en appui d'étanchéité sur son siège 20 et sur le joint 18 de façon à obstruer le passage du liquide lave-glace vers le réservoir 2 et bloquer la colonne de liquide lave-glace sous le flotteur en pointeau 11 et dans le second tronçon de canalisation 10, colonne qui exerce un effet d'aspiration sur l'extrémité tronconique 19 pour la maintenir en appui sur le siège 20 et le joint 18.

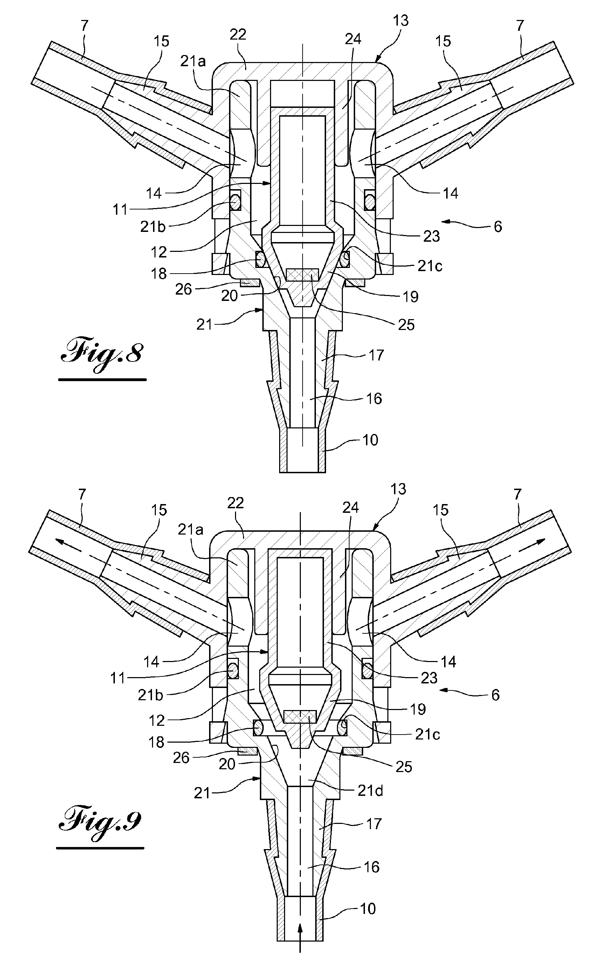

La variante de réalisation des figures 8 et 9 comporte par rapport à celle des figures 6 et 7 des moyens d'aimantation permettant à l'extrémité inférieure tronconique 19 du flotteur en pointeau 11 d'être plaquée sur le joint d'étanchéité 18 et le siège 20 à la position de repos du flotteur afin d'éviter une vidange complète du circuit de distribution lors des vibrations du véhicule susceptible d'être appliquées au flotteur 11.

Ces moyens d'aimantation peuvent comprendre un aimant 25 logé dans l'extrémité inférieure tronconique du flotteur en pointeau 11 et une pièce métallique 26 fixée à l'extérieur du corps d'embase 21 à proximité de l'aimant 25 de manière à s'attirer mutuellement et magnétiquement dans un sens permettant de plaquer l'extrémité tronconique 19 sur le joint d'étanchéité 18 et le siège 20.

La pièce métallique 26 peut revêtir la forme d'une bague annulaire solidaire du corps d'embase 21 coaxialement à la tubulure externe 17.

En variante, les moyens d'aimantation peuvent comporter un aimant aux lieu et place de la pièce métallique 26 et une pièce métallique aux lieu et place de l'aimant 25 ou un autre aimant aux lieu et place de la pièce métallique 26 en plus de l'aimant 25 présent dans l'extrémité inférieure tronconique 19 du flotteur en pointeau 11.

Selon une autre variante de réalisation, les moyens d'aimantation peuvent être constitués par un aimant aux lieu et place de la pièce métallique 26 et une couche métallique revêtant extérieurement ou intérieurement l'extrémité inférieure tronconique 19 du flotteur 11.

Bien entendu, la force d'attraction magnétique exercée par les moyens d'aimantation pour maintenir l'extrémité inférieure tronconique 19 du flotteur 11 en appui d'étanchéité sur le joint 18 et le siège 20 doit être inférieure à la pression du liquide lave-glace exercée sur le flotteur 11 lorsque la pompe 3 est activée afin d'assurer normalement la circulation du liquide lave-glace vers les gicleurs 5 et cette force d'attraction magnétique doit être négligeable lorsque le flotteur 11 redescend vers son siège 20 dès l'arrêt de la pompe 3 afin de permettre au liquide lave-glace présent dans le premier tronçon de canalisation 7 d'être complètement évacué vers le réservoir 2. Cette force d'attraction n'intervient qu'une fois le flotteur 11 à sa position de repos.

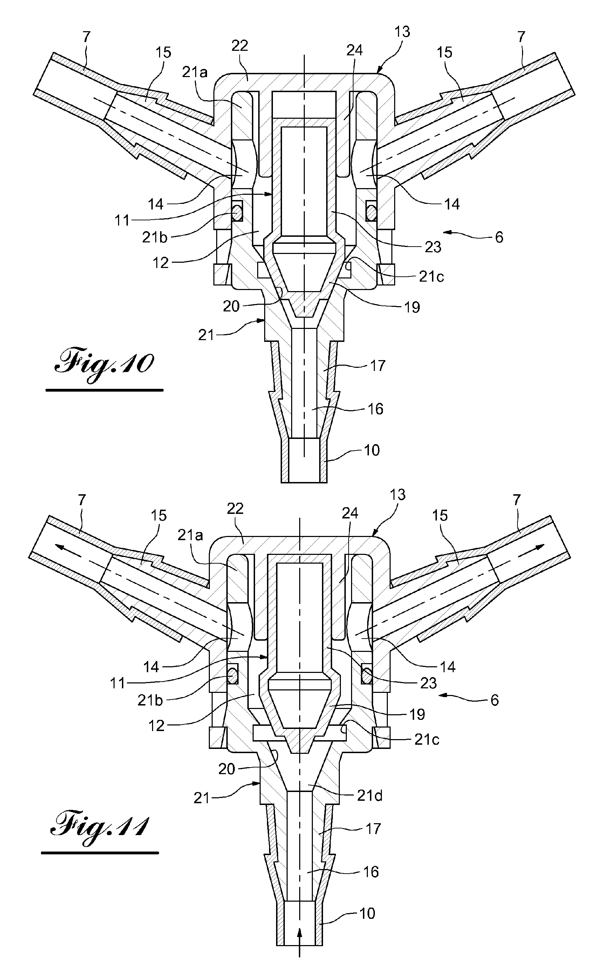

Les variantes de réalisation des figures 10 à 13 ne diffèrent de celles des figures 6 à 9 que par l'absence du joint d'étanchéité 18 de sorte que l'extrémité inférieure tronconique 19 du flotteur 11 est uniquement en appui d'étanchéité sur son siège 20 lorsque le flotteur 11 occupe sa position basse de repos d'obstruction du passage de liquide lave-glace vers le réservoir 2.

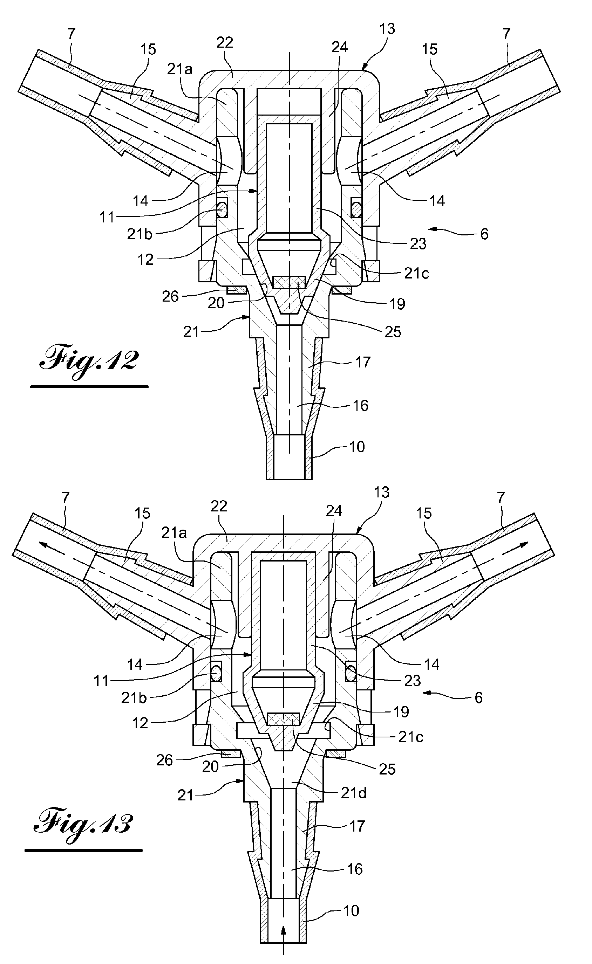

La variante de réalisation des figures 10 et 11 ne comporte pas de moyen d'aimantation permettant de maintenir l'extrémité inférieure tronconique du flotteur 11 sur son siège d'étanchéité 20 alors que la variante de réalisation des figures 12 et 13 comporte de tels moyens d'aimantation dont les variantes de réalisation ont déjà été décrites en référence aux figures 8 et 9 et ne seront donc pas à nouveau détaillés.

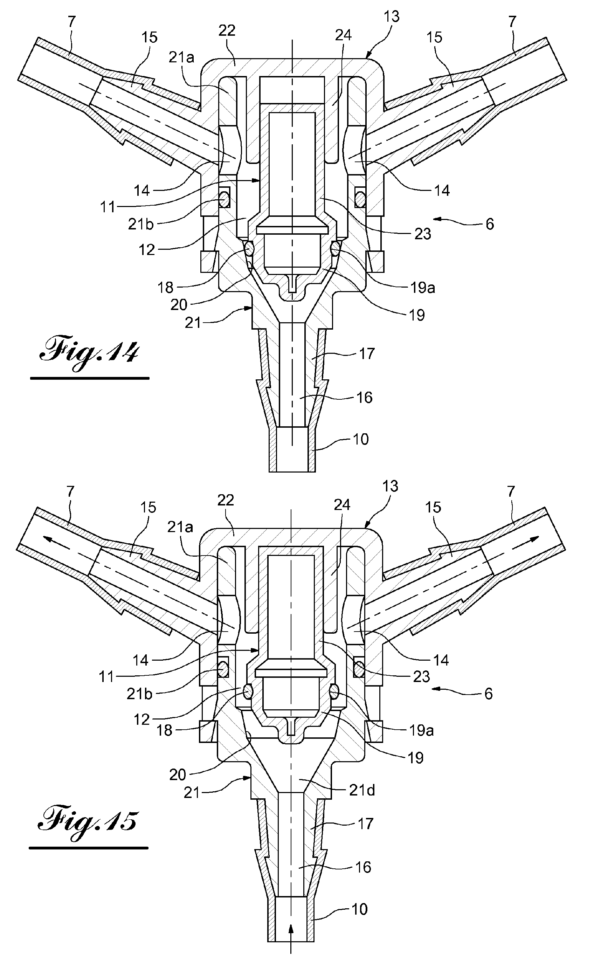

Les variantes de réalisation représentées aux figures 14 à 17 diffèrent de celles des figures 6 à 13 en ce que l'extrémité inférieure 19 du flotteur en pointeau 11 présente une forme générale cylindrique comportant une gorge externe 19a dans laquelle est logé le joint annulaire d'étanchéité 18 qui vient en appui d'étanchéité sur un siège annulaire interne 20 du corps d'embase 21 lorsque le flotteur 11 occupe sa position basse de repos, le siège d'étanchéité définissant une ouverture centrale pouvant communiquer avec la tubulure externe 17 au travers d'un orifice tronconique 21d du corps d'embase 21.

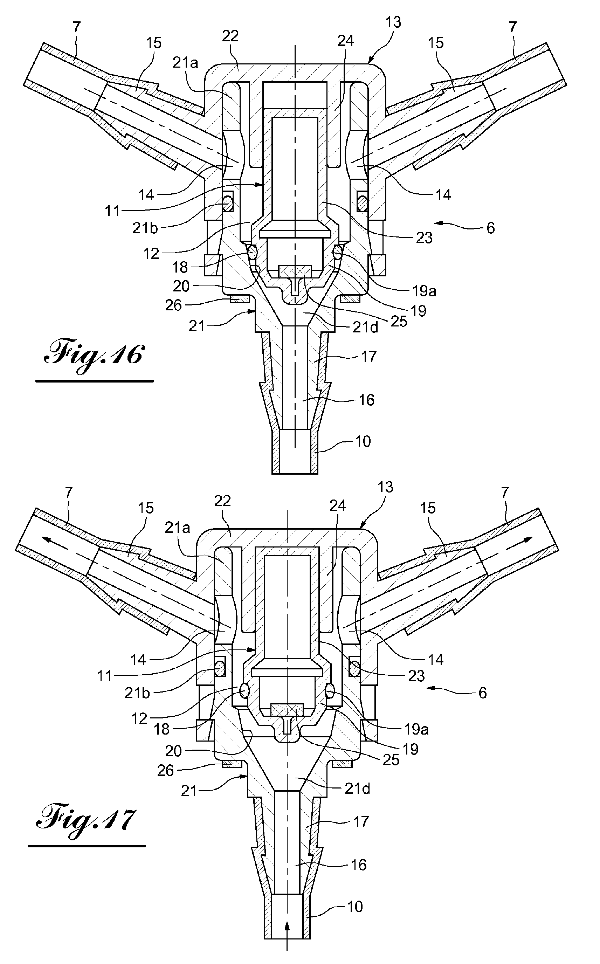

La variante de réalisation des figures 16 et 17 diffère de celle des figures 14 et 15 en ce qu'elle comporte des moyens d'aimantation permettant de maintenir le joint d'étanchéité 18 de l'extrémité inférieure cylindrique du flotteur 11 en appui d'étanchéité sur son siège 20 lorsque le flotteur occupe sa position basse de repos. Ces moyens d'aimantation peuvent revêtir différentes variantes de réalisation comme décrit en référence aux figures 8 et 9 et ne seront donc pas à nouveau détaillés.

En tout cas, les variantes de réalisation des figures 14 à 17 fonctionnent de la même manière que celles décrites en référence aux figures 6 à 13.

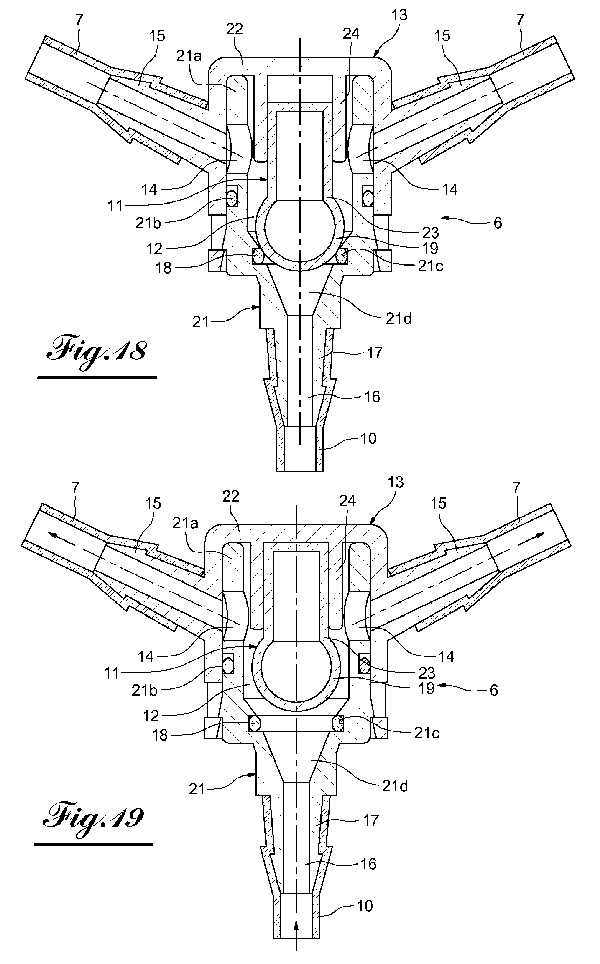

Selon le mode de réalisation représenté aux figures 18 à 21, le flotteur 11 comprend à son extrémité inférieure une partie généralement sphérique ou en bille 19 surplombée d'une tige cylindrique 23 à coulissement guidé en direction verticale dans un fourreau fixe 24 du couvercle 22 comme dans les diverses variantes de réalisation décrites en référence aux figures 6 à 17.

Comme pour notamment les figures 6 et 7, un joint annulaire d'étanchéité 18 est logé dans une rainure circulaire 21c réalisée dans l'orifice tronconique 21d du corps d'embase 21 de façon que la bille 19 du flotteur 11 soit en appui d'étanchéité sur le joint 18 lorsqu'elle occupe sa position basse de repos d'obstruction du passage du liquide lave-glace représentée en figure 18.

Lorsque la pompe 3 est sollicitée par une commande de l'utilisateur, la pression du liquide lave-glace dans l'orifice 21d soulève le flotteur à bille 11 en position haute pour désengager la bille du joint d'étanchéité 18 et permettre au liquide lave-glace de sortir par les deux tubulures 15 du couvercle 22 afin d'alimenter en liquide lave-glace les gicleurs 5. Lorsque la commande n'est plus activée, le liquide lave-glace stagnant dans le premier tronçon de canalisation 7 redescend et retourne vers le réservoir 2 et le flotteur à bille 11 descend dans la chambre 12 au fur et à mesure que le niveau de liquide présent dans cette chambre baisse jusqu'à ce que la bille 19 du flotteur 11 vienne en appui d'étanchéité sur le joint 18 pour empêcher le liquide lave-glace restant de retourner au réservoir et d'être maintenu dans la colonne d'eau sous la bille 19 du flotteur 11 pour exercer sur ce dernier un effet d'aspiration de maintien de la bille en appui d'étanchéité sur le joint 18.

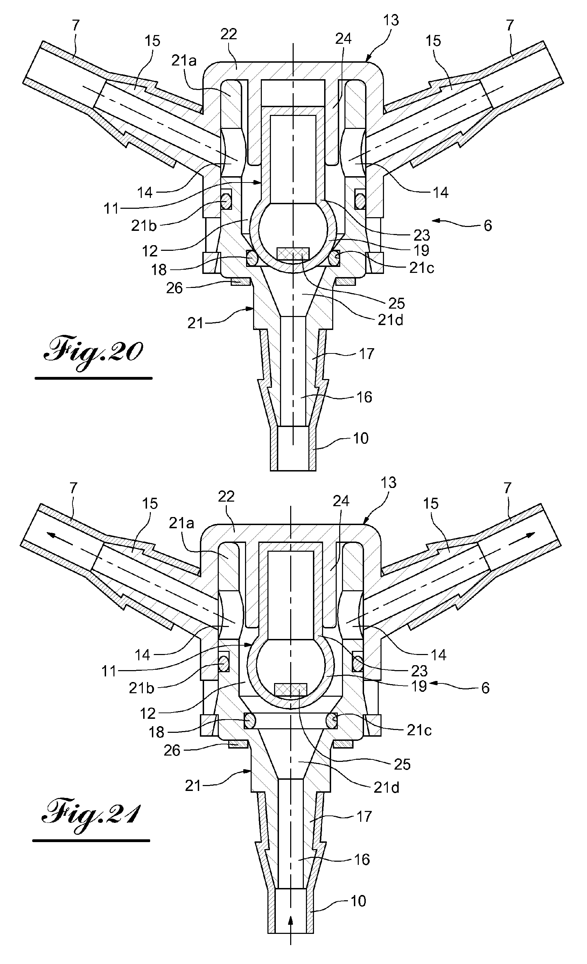

La variante de réalisation des figures 20 et 21 ne diffère de celle des figures 18 et 19 que par la présence de moyens d'aimantation permettant de maintenir la bille 19 du flotteur 11 en appui d'étanchéité sur le joint 18 lorsqu'elle occupe sa position basse de repos. Ces moyens d'aimantation revêtent diverses formes de réalisation déjà décrites en référence aux figures 8 à 9 et ne seront donc pas à nouveau décrits, sinon qu'ils permettent à la bille 19 du flotteur 11 d'être bien plaquée sur le joint 18 à sa position de repos afin d'éviter une vidange complète du circuit de distribution lors des vibrations du véhicule susceptible d'être appliquées au flotteur 11.

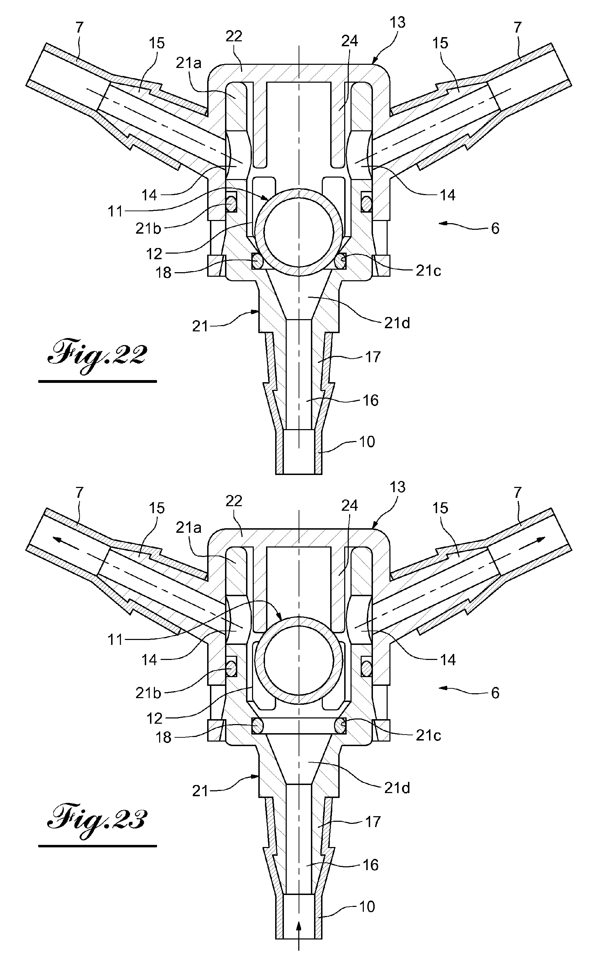

Selon le mode de réalisation représenté aux figures 22 à 25, le flotteur 11 est constitué uniquement par une bille emprisonnée librement dans la chambre 12 entre sa position basse de repos en appui d'étanchéité sur un joint annulaire d'étanchéité 18 monté dans une rainure circulaire 21c du corps d'embase 21 comme dans les variantes de réalisation des figures 18 à 21 et une position haute en butée sur l'extrémité libre du fourreau fixe 24 de la paroi supérieure du couvercle 22.

Lorsque la pompe 3 est sollicitée par une commande de l'utilisateur, la pression du liquide de lavage pénétrant dans la chambre 12 soulève la bille 11 en position haute jusqu'à ce qu'elle vienne en butée sur l'extrémité libre inférieure du fourreau 24 pour permettre au liquide lave-glace de sortir par les deux tubulures externes 15 afin d'alimenter les gicleurs 5 en liquide lave-glace. Lorsque la commande n'est plus activée, le liquide lave-glace présent dans le premier tronçon de canalisation 7 redescend vers le réservoir 2 au travers de la chambre 12 dans laquelle la bille 11 descend au fur et à mesure que le niveau de liquide dans cette chambre baisse jusqu'à ce que la bille vienne en appui sur le joint d'étanchéité 18 pour obstruer le passage du liquide lave-glace afin de l'empêcher de retourner au réservoir 2 et bloquer la colonne du liquide lave-glace sur la bille 11 exerçant sur cette dernière un effet d'aspiration la maintenant en appui sur le joint d'étanchéité 18.

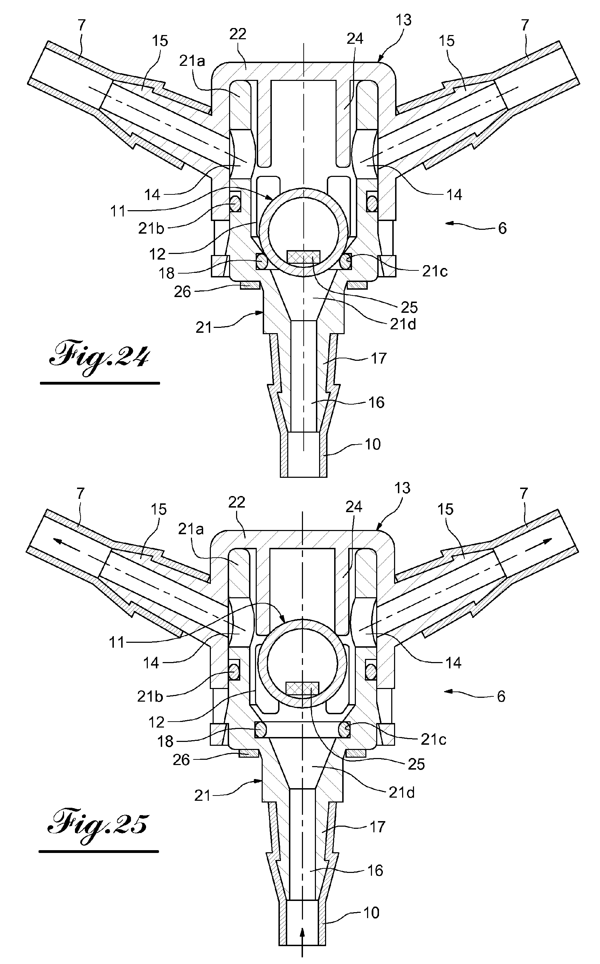

La variante de réalisation des figures 24 et 25 diffère de celle des figures 22 et 23 en ce qu'elle comporte des moyens d'aimantation permettant de plaquer la bille 11 sur le joint d'étanchéité 18 à sa position de repos et d'éviter la vidange complète du circuit de distribution lors des vibrations du véhicule susceptibles d'être appliquées à la bille. Ces moyens d'aimantation revêtent différentes formes de réalisation déjà décrites notamment en référence aux figures 8 et 9.

Quelles que soient les différentes variantes de réalisation décrites en référence aux figures 6 à 25, le flotteur 11 peut être réalisé en une matière plastique en étant intérieurement creux et, bien entendu, la densité des flotteurs 11 est inférieure à la densité du liquide lave-glace.

Le circuit de distribution ci-dessus décrit de l'invention est d'une conception simple, efficace, et peu coûteuse pour empêcher au liquide lave-glace présent dans le tronçon de canalisation extérieur 7 de geler par temps froid et sous l'effet aérodynamique d'avancement du véhicule. En outre, la conception de ce circuit de distribution est telle qu'elle n'allonge pas le temps de réponse de la fonction de lavage d'une vitre par les gicleurs et évite de purger complètement tout le circuit de distribution.

## Revendications

1. Circuit de distribution de liquide lave-glace pour un véhicule, tel qu'un véhicule automobile, comprenant au moins un gicleur (5), un ensemble formant clapet (6) disposé dans une canalisation (7,10) reliant le gicleur (5) à un réservoir de liquide lave-glace (2) et une pompe (3) d'alimentation en liquide lave-glace et permettant de diriger le liquide lave-glace vers le gicleur (5) lorsque la pompe (3) est activée et de retourner vers le réservoir (2) le liquide lave-glace présent dans un premier tronçon de canalisation (7) entre le gicleur (5) et l'ensemble formant clapet (6) lorsque la pompe (3) est arrêtée, **caractérisé en ce que** l'ensemble formant clapet (6) comprend un flotteur (11) logé dans une chambre (12) d'un corps fixe (13) communiquant d'une part avec le premier tronçon de canalisation (7) et d'autre part avec un second tronçon de canalisation (10) reliant l'ensemble formant clapet (6) au réservoir (2) et à la pompe (3) et **en ce que** le flotteur (11) peut occuper une position haute dans la chambre (12) lorsque la pompe (3) est activée pour permettre le passage du liquide lave-glace du second tronçon (10) au premier tronçon (7) de canalisation au travers de la chambre (12) et peut s'abaisser avec le niveau de liquide lave-glace dans la chambre (12) lorsque la pompe (3) est arrêtée pour permettre l'évacuation du liquide lave-glace dans le premier tronçon (7) vers le second tronçon (10) de canalisation au travers de la chambre (12) jusqu'à ce que le flotteur (11) occupe une position basse de repos dans la chambre (12) à laquelle il obstrue le passage du liquide lave-glace vers le second tronçon (10) et bloque une colonne de liquide lave-glace dans ce second tronçon (10).

2. Circuit de distribution selon la revendication 1, **caractérisé en ce que** le flotteur (1) est constitué par un pointeau dont la tige supérieure (23) permet le coulissement guidé du pointeau relativement au corps fixe (13) entre ses positions haute et basse de repos et l'extrémité inférieure (19) vient en appui, en position basse de repos du pointeau, sur un siège d'étanchéité (20) au fond du corps fixe (13) et communiquant avec le second tronçon de canalisation (10).

3. Circuit de distribution selon la revendication 2, **caractérisé en ce qu'**un joint annulaire d'étanchéité (18) est interposé entre l'extrémité inférieure (19) du pointeau (11) et le siège d'étanchéité (20).

4. Circuit de distribution selon la revendication 3, **caractérisé en ce que** le joint annulaire d'étanchéité (18) est solidaire du siège d'étanchéité (20) ou de l'extrémité inférieure (19) du pointeau (11).

5. Circuit de distribution selon l'une des revendications 2 à 4, **caractérisé en ce que** l'extrémité inférieure (19) du pointeau (11) et le siège d'étanchéité (20) sont tronconiques.

6. Circuit de distribution selon la revendication 1, **caractérisé en ce que** le flotteur (11) est constitué par une bille venant en appui d'étanchéité, à sa position basse de repos, sur un joint annulaire d'étanchéité (18) solidaire du fond du corps fixe (13) à orifice (21d) communiquant avec le second tronçon de canalisation (10).

7. Circuit de distribution selon la revendication 6, **caractérisé en ce que** la bille (11) comporte une tige supérieure (23) permettant le coulissement guidé de la bille (11) relativement au corps fixe (13) entre ses positions haute et basse de repos.

8. Circuit de distribution selon l'une des revendications précédentes, **caractérisé en ce que** le flotteur (11) est maintenu à sa position basse de repos par des moyens d'aimantation (25,26).

9. Circuit de distribution selon la revendication 8, **caractérisé en ce que** les moyens d'aimantation comprennent un aimant (25) logé dans le flotteur (11) et une pièce métallique ou un autre aimant (26) solidaire du corps fixe (13) à proximité de l'aimant (25) du flotteur (11) pour attirer magnétiquement ce dernier vers la pièce métallique ou l'autre aimant (26).

10. Circuit de distribution selon la revendication 8, **caractérisé en ce que** les moyens d'aimantation comprennent un revêtement métallique solidaire du flotteur (11) et un aimant (26) solidaire du corps fixe (13) à proximité du revêtement métallique pour attirer magnétiquement le flotteur (11).

11. Circuit de distribution selon l'une des revendications précédentes, **caractérisé en ce que** le flotteur (11) est en une matière plastique.

12. Circuit de distribution selon l'une des revendications précédentes, **caractérisé en ce que** le flotteur (11) a une densité inférieure à celle du liquide lave-glace.

13. Circuit de distribution selon l'une des revendications précédentes, **caractérisé en ce que** le gicleur (5) est monté sur un essuie-glace du véhicule et au moins une partie du premier tronçon de canalisation (7) est située à l'extérieur du capot moteur (9) du véhicule.

14. Circuit de distribution selon l'une des revendications précédentes, **caractérisé en ce que** le flotteur (11) a une densité inférieure à un.

15. Véhicule, tel qu'un véhicule automobile, **caractérisé en ce qu'**il est équipé d'un circuit de distribution de liquide lave-glace tel que défini dans l'une quelconque des revendications 1 à 14.

## Patentansprüche

1. Kreislauf zur Abgabe einer Scheibenwaschflüssigkeit für ein Fahrzeug, wie zum Beispiel ein Kraftfahrzeug, der mindestens eine Düse (5), eine Einheit, die ein Ventil (6) bildet, aufweist, das in einer Kanalisation (7, 10) angeordnet ist, die die Düse (5) mit einem Scheibenwaschflüssigkeitsbehälter (2) und einer Pumpe (3) zur Versorgung mit Scheibenwaschflüssigkeit verbindet, und es erlaubt, die Scheibenwaschflüssigkeit zu der Düse (5) zu lenken, wenn die Pumpe (3) betätigt wird, und zu dem Scheibenwaschflüssigkeitsbehälter (2) zurückkehren, der in einem ersten Kanalisationsabschnitt (7) zwischen der Düse (5) und der Einheit, die das Ventil (6) bildet, vorliegt, wenn die Pumpe (3) gestoppt wird, **dadurch gekennzeichnet, dass** die Einheit, die das Ventil (6) bildet, einen Schwimmer (11) aufweist, der in einer Kammer (12) eines stationären Körpers (13) untergebracht ist, der einerseits mit dem ersten Kanalisationsabschnitt (7) und andererseits mit einem zweiten Kanalisationsabschnitt (10) in Verbindung steht, der die Einheit, die das Ventil (6) bildet, mit dem Behälter (2) und der Pumpe (3) verbindet, und dass der Schwimmer (11) eine Hochstellung in der Kammer (12) einnehmen kann, wenn die Pumpe (3) betätigt wird, um die Passage der Scheibenwaschflüssigkeit von dem zweiten Kanalisationsabschnitt (10) zu dem ersten Kanalisationsabschnitt (7) durch die Kammer (12) zu erlauben, und sich mit dem Scheibenwaschflüssigkeitsniveau in der Kammer (12) senken kann, wenn die Pumpe (3) gestoppt wird, um das Abfließen der Scheibenwaschflüssigkeit in dem ersten Kanalisationsabschnitt (7) zu dem zweiten Kanalisationsabschnitt (10) durch die Kammer (12) zu erlauben, bis der Schwimmer (11) eine untere Ruhestellung in der Kammer (12) einnimmt, in der er die Passage der Scheibenwaschflüssigkeit zu dem zweiten Abschnitt (10) verschließt und eine Scheibenwaschflüssigkeitssäule in diesem zweiten Abschnitt (10) blockiert.

2. Abgabekreislauf nach Anspruch 1, **dadurch gekennzeichnet, dass** der Schwimmer (1) aus einer Düsennadel besteht, deren oberer Schaft (23) das geführte Gleiten den Düsennadel in Bezug zu dem stationären Körper (13) zwischen seiner Hochstellung und unteren Ruhestellung erlaubt, und das untere Ende (19) in unterer Ruhestellung der Düsennadel auf einem Abdichtsitz (20) am Grund des stationären Körpers (13) zum Aufliegen kommt und mit dem zweiten Kanalisationsabschnitt (10) in Verbindung steht.

3. Abgabekreislauf nach Anspruch 2, **dadurch gekennzeichnet, dass** eine ringförmige Dichtung (18) zwischen das untere Ende (19) der Düsennadel (11) und den Abdichtsitz (20) eingefügt ist.

4. Abgabekreislauf nach Anspruch 3, **dadurch gekennzeichnet, dass** die ringförmige Dichtung (18) fest mit dem Abdichtsitz (20) oder dem unteren Ende (19) der Düsennadel (11) verbunden ist.

5. Abgabekreislauf nach einem der Ansprüche 2 bis 4, **dadurch gekennzeichnet, dass** das untere Ende (19) der Düsennadel (11) und der Abdichtsitz (20) kegelstumpfförmig sind.

6. Abgabekreislauf nach Anspruch 1, **dadurch gekennzeichnet, dass** der Schwimmer (11) aus einer Kugel besteht, die zur abdichtenden Auflage in ihrer unteren Ruhestellung auf einer ringförmigen Dichtung (18) kommt, die mit dem Grund des stationären Körpers (13) mit Öffnung (21d), die mit dem zweiten Kanalisationsabschnitt (10) in Verbindung steht, fest verbunden ist.

7. Abgabekreislauf nach Anspruch 6, **dadurch gekennzeichnet, dass** die Kugel (11) einen oberen Schaft (23) aufweist, der das geführte Gleiten der Kugel (11) in Bezug zu dem stationären Körper (13) zwischen seiner Hochstellung und seiner unteren Ruhestellung erlaubt.

8. Abgabekreislauf nach einem der vorhergehenden Ansprüche, **dadurch gekennzeichnet, dass** der Schwimmer (11) an seiner unteren Ruhestellung von Magnetisierungsmitteln (25, 26) gehalten wird.

9. Abgabekreislauf nach Anspruch 8, **dadurch gekennzeichnet, dass** die Magnetisierungsmittel einen Magnet (25) aufweisen, der in dem Schwimmer (11) untergebracht ist, und ein Metallteil oder einen anderen Magnet (26), das/der mit dem stationären Körper (13) in der Nähe des Magnets (25) des Schwimmers (11) fest verbunden ist, um diesen Letzteren magnetisch zu dem Metallteil oder dem anderen Magnet (26) anzuziehen.

10. Abgabekreislauf nach Anspruch 8, **dadurch gekennzeichnet, dass** die Magnetisierungsmittel eine Metallbeschichtung aufweisen, die mit dem Schwimmer (11) fest verbunden ist, und einen Magnet (26), der mit dem stationären Körper (13) in der Nähe der metallischen Beschichtung fest verbunden ist, um den Schwimmer (11) magnetisch anzuziehen.

11. Abgabekreislauf nach einem der vorhergehenden Ansprüche, **dadurch gekennzeichnet, dass** der Schwimmer (11) aus einem Kunststoff besteht.

12. Abgabekreislauf nach einem der vorhergehenden Ansprüche, **dadurch gekennzeichnet, dass** der Schwimmer (11) eine Dichte hat, die kleiner ist als die der Scheibenwaschflüssigkeit.

13. Abgabekreislauf nach einem der vorhergehenden Ansprüche, **dadurch gekennzeichnet, dass** die Düse (5) auf einen Scheibenwischer des Fahrzeugs montiert ist und dass mindestens ein Teil des ersten Kanalisationsabschnitts (7) außerhalb der Motorhaube (9) des Fahrzeugs liegt.

14. Abgabekreislauf nach einem der vorhergehenden Ansprüche, **dadurch gekennzeichnet, dass** der Schwimmer (11) eine Dichte kleiner als eins hat.

15. Fahrzeug, wie zum Beispiel ein Kraftfahrzeug, **dadurch gekennzeichnet, dass** es mit einem Scheibenwaschflüssigkeits-Abgabekreislauf wie in einem der Ansprüche 1 bis 14 definiert ausgestattet ist.

## Claims

1. A circuit for dispensing windscreen washer fluid for a vehicle, such as a motor vehicle, including at least one nozzle (5), an assembly forming a valve (6) disposed in a duct (7, 10) connecting the nozzle (5) to a windscreen washer fluid reservoir (2) and a pump (3) for feeding with windscreen washer fluid and permitting the windscreen washer fluid to be directed towards the nozzle (5) when the pump (3) is activated and permitting the windscreen washer fluid present in a first duct section (7) between the nozzle (5) and the valve-forming assembly (6) to be returned towards the reservoir (2) when the pump (3) is stopped, **characterized in that** the valve-forming assembly (6) includes a float (11) housed in a chamber (12) of a stationary body (13) communicating on the one hand with the first duct section (7) and on the other hand with a second duct section (10) connecting the valve-forming assembly (6) to the reservoir (2) and to the pump (3) and **in that** the float (11) can occupy a top position in the chamber (12) when the pump (3) is activated to permit the passage of the windscreen washer fluid from the second duct section (10) to the first duct section (7) through the chamber (12) and can drop with the level of windscreen washer fluid in the chamber (12) when the pump (3) is stopped to permit the evacuation of the windscreen washer fluid in the first duct section (7) towards the second duct section (10) through the chamber (12) until the float (11) occupies a bottom rest position in the chamber (12), at which it obstructs the passage of the windscreen washer fluid towards the second section (10) and blocks a column of windscreen washer fluid in this second section (10).

2. The dispensing circuit according to claim 1, **characterized in that** the float (1) is constituted by a needle, the upper rod (23) of which permits the guided sliding of the needle relative to the stationary body (13) between its top and bottom rest positions and the lower end (19) comes to rest, in the bottom rest position of the needle, on a sealing seat (20) at the bottom of the stationary body (13) and communicating with the second duct section (10).

3. The dispensing circuit according to claim 2, **characterized in that** an annular sealing gasket (18) is interposed between the lower end (19) of the needle (11) and the sealing seat (20).

4. The dispensing circuit according to claim 3, **characterized in that** the annular sealing gasket (18) is integral with the sealing seat (20) or with the lower end (19) of the needle (11).

5. The dispensing circuit according to one of claims 2 to 4, **characterized in that** the lower end (19) of the needle (11) and the sealing seat (20) are frustoconical.

6. The dispensing circuit according to claim 1, **characterized in that** the float (11) is constituted by a ball coming to rest with sealing contact, in its bottom rest position, on a annular sealing gasket (18) integral with the bottom of the stationary body (13) having an opening (21d) communicating with the second duct section (10).

7. The dispensing circuit according to claim 6, **characterized in that** the ball (11) comprises an upper rod (23) permitting the guided sliding of the ball (11) relative to the stationary body (13) between its top and bottom rest positions.

8. The dispensing circuit according to one of the preceding claims, **characterized in that** the float (11) is maintained in its bottom rest position by magnetization means (25, 26).

9. The dispensing circuit according to claim 8, **characterized in that** the magnetization means include a magnet (25) housed in the float (11) and a metallic part or another magnet (26) integral with the stationary body (13) close to the magnet (25) of the float (11) to magnetically attract the latter towards the metallic part or the other magnet (26).

10. The dispensing circuit according to claim 8, **characterized in that** the magnetization means include a metallic covering integral with the float (11) and a magnet (26) integral with the stationary body (13) close to the metallic covering to magnetically attract the float (11).

11. The dispensing circuit according to one of the preceding claims, **characterized in that** the float (11) is of a plastic material.

12. The dispensing circuit according to one of the preceding claims, **characterized in that** the float (11) has a density less than that of the windscreen washer fluid.

13. The dispensing circuit according to one of the preceding claims, **characterized in that** the nozzle (5) is mounted on a windscreen wiper of the vehicle and at least a portion of the first duct section (7) is situated on the exterior of the engine bonnet (9) of the vehicle.

14. The dispensing circuit according to one of the preceding claims, **characterized in that** the float (11) has a density less than one.

15. A vehicle, such as a motor vehicle, **characterized in that** it is equipped with a circuit for dispensing windscreen washer fluid as defined in any one of claims 1 to 14.
